# EUROPÄISCHE PATENTANMELDUNG

(11) **EP 0 940 216 A2**
(43) Veröffentlichungstag der Anmeldung: **08.09.1999**
(21) Anmeldenummer: 99101445.7
(22) Anmeldetag: 27.01.1999
(51) Int. Cl.: B23P 15/06, F16J 9/00

(54) **Verfahren zur Herstellung von Kolbenringen**

(30) Priorität: 06.03.1998 DE 19809659
(71) Anmelder: Federal-Mogul Burscheid GmbH, 51399 Burscheid (DE)
(72) Erfinder: Trübenbach, Werner, 86573 Obergriesbach (DE)

(57) **Zusammenfassung**

Die Erfindung betrifft ein Verfahren zur Herstellung von Kolbenringen, insbesondere für Verbrennungskraftmschinen. Die Kolbenringe (8, 8', 8'') werden von einer Buchse (3), die durch thermisches Spritzen auf die Außenfläche eine Domes (1) gebildet ist, abgestochen. Die Kolbenringe (8, 8', 8'') bestehen aus einem gespritzten Grundkörper (4) und einer gespritzten Gleitschicht (6).

## Beschreibung

Die Erfindung betrifft ein Verfahren zur Herstellung von Kolbenringen, insbesondere für Verbrennungskraftmaschinen durch Abstechen einzelner Ringe von unrunden Buchsen aus metallischen Werkstoffen.

Die Herstellung von Kolbenringen für Verbrennungskraftmaschinen erfolgt auf unterschiedlichste Weise, je nach Verwendungszweck, zum Beispiel als Kompressionskolbenring oder als Ölabstreifkolbenring, werden Kolbenringe aus Gußeisen oder aus Stahl gefertigt. Entsprechend der Belastung des Kolbenringes werden spezielle Legierungen mit entsprechender Verschleißbeständigkeit, Elastizität, Fertigkeit und Temperaturbeständigkeit verwendet. Das Gießen von Kolbenringen erfolgt im Einzelgußverfahren, im Stapelgußverfahren oder es werden zylindrische oder unrunde Buchsen gegossen, von denen dann einzelne Ringe abgestochen werden.

Die Herstellung der Buchsen kann aufunterschiedliche Weise erfolgen. Im Schleudergußverfahren können nur zylindrische Buchsen hergestellt werden. Von den Buchsen werden einzelne Ringe abgestochen, die bis zur Fertigstellung noch eine Vielzahl von Bearbeitungsstationen durchlaufen. Nach dem Aufschneiden der Ringe müssen sie durch aufwendige thermische und/oder mechanische Bearbeitungsverfahren so behandelt werden, daß die Ringe eine erforderliche Eigenspannung erhalten, diese ist notwendig, damit der Ring im Zylinder unter Spannung an der Zylinderwand anliegt.

Im Sandgußverfahren hergestellte unrunde Buchsen haben den Nachteil hoher Herstellkosten, da aufwendige Sandformarbeiten, relativ lange Verweilzeiten in der Form und anschließende Putzarbeiten an den Gußstücken zur weiteren Bearbeitung notwendig sind.

Um die Nachteile zu beheben, wurde gemäß DE 3 623 122 C1 bereits vorgeschlagen, Buchsen im Stranggußverfahren herzustellen. Die auf diese Weise hergestellten Buchsen zeichnen sich durch ein feinkörniges, lunkerfreies Gefüge aus. Auch diese Buchsen müssen zur Weiterverarbeitung verschiedene Bearbeitungsstationen durchlaufen. In einer Bearbeitungsstation werden einzelne Ringe von der Buchse abgestochen. Die Ringe werden lageorientiert zu einem Paket gespannt und aufgeschnitten. Auf einem Dorn können die Ringe anschließend rund gespannt werden, um dann in einer weiteren Station mit einer verschleißfesten Gleitschicht auf der äußeren Umfangsfläche versehen zu werden. Aus der DE 3 144 335 A1 ist ein Verfahren zur Herstellung einer verschleißfesten Schicht auf der Gleitfläche von Ringen zu entnehmen. Die einzelnen Ringe werden auf einen Dom paketiert und mit einer thermischen Spritzschicht überzogen. Der überspritzte Dom wird dann einer weiteren Bearbeitungsstation zugeführt, in der die einzelnen Ringe voneinander getrennt werden. Insgesamt müssen so eine Vielzahl von Bearbeitungsverfahren durchgeführt werden, die die Herstellkosten der Kolbenringe verteuern.

Der Erfindung liegt die Aufgabe zugrunde, ein gattungsgemäßes Herstellungsverfahren dahingehend zu verbessern, daß von der Buchse beschichtete Ringe abstechbar sind.

Diese Aufgabe wird erfindungsgemäß durch die kennzeichnenden Merkmale des Patentanspruchs 1 gelöst. Vorteilhalte Ausgestaltungen der Erfindung sind in den Unteransprüchen dokumentiert. Für das angewendete Verfahren wird ein Dorn mit einem dem Innenumfang des herzustellenden Kolbenrings verwendet. Der Dom kann eine beliebige Querschnittsform aufweisen, das heißt, für das erfindungsgemäße Verfahren können sowohl zylindrische, als auch unrunde Querschnittsformen aufweisende Dornen zur Anwendung gelangen. Als thermisches Spritzverfahren sind alle bekannten Spritzverfahren prinzipiell anwendbar. Bevorzugt wird das Flammspritzverfahren mit im Handel erhältlichen Spritzwerkstoffen aus Metall. Die Auswahl der Spritzwerkstoffe ist abhängig vom Anwendungsfall. Für den Grundkörper werden Materialien mit geeigneten Eigenschaften hinsichtlich der Festigkeit, des Ausdehnungskoeffizienten (Bimetall-Ring) und der Elastizität eingesetzt. Während bei der Auswahl der Gleitschicht Gesichtspunkte im Hinblick auf die Laufeigenschalten im Motor, das heißt, zum Beispiel, Verschleißfestigkeit und Brandspursicherheit, ausschlaggebend sind.

Durch die Erfindung ist es nunmehr möglich, Kolbenringe mit unterschiedlichen Wanddicken, axialen Höhen und Eigenschaften herzustellen, bzw. auf Motortyp definiert einzustellen, ohne daß zusätzliche Herstellkosten, zum Beispiel für Gußmodelle entstehen. Da in einer Bearbeitungsstation sowohl der Grundkörper, als auch die Gleitschicht mit dem gleichen Arbeitsverfahren herstellbar ist, reduzieren sich die Herstellkosten wesentlich.

Die Erfindung ist anhand eines Ausführungsbeispieles als Prinzipskizze dargestellt. Es zeigen:
- Figur 1: Herstellung der Buchse
- Figur 2: Abstechen der Kolbenringe von der Buchse nach Fig. 1
- Figur 3: Querschnitt eines erfindungsgemäßen Kolbenringes

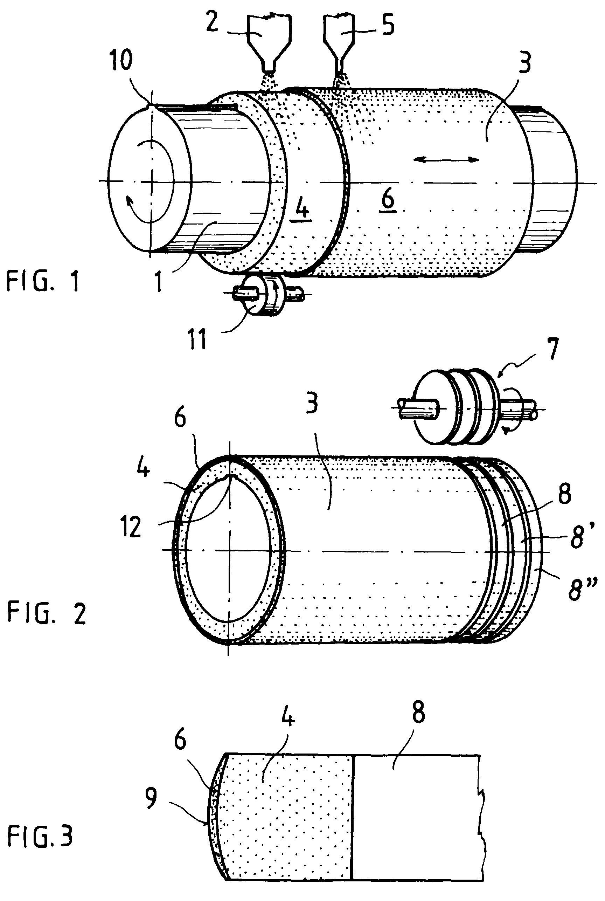

In der Figur 1 ist ein unrunder Dorn 1, zum Beispiel aus Stahl dargestellt. Auf seiner Umfangsfläche erstreckt sich in axialer Richtung eine Stoßmarkierung 10 in Form einer stegförmigen Erhöhung. Auf die Oberfläche des Domes 1 wird mittels eines thermischen Spritzverfahrens Spritzpulver aus einer Düse 2 aufgetragen, indem die Düse 2 relativ zum Dom 1 axial bewegt wird. Das aufgetragene Spritzpulver kann mit einer nachfolgenden Rolliereinrichtung 11 sofort verdichtet werden. Auf den auf diese Weise entstehenden Grundkörper 4 kann zum Beispiel mittels einer anderen Düse 5 eine Gleitschicht 6 aufgespritzt werden, ohne daß die Buchse 3 von Dorn 1 entfernt werden muß.

Nach Fertigstellung der Buchse 3 wird sie vom Dorn 1 abgezogen und einem Trennwerkzeug 7 (Fig. 2) zugeführt. Das Trennwerkzeug 7 sticht einzelne Kolbenringe 8, 8', 8'', von der Buchse 3 ab. Die einzelnen Kolbenringe 8, 8', 8'', weisen eine von der Stoßmarkierung 10 erzeugte Stoßkennzeichnung 12 auf, so daß sie leicht stoßorientiert paketiert werden können, um sie an der Stoßkennzeichnung 12 aufzuschneiden.

Wie in der Figur 3 dargestellt, können die Kolbenringe 8 ein abgerundetes Querschnittsprofil 9 aufweisen, welches mittels eines nicht dargestellten Werkzeuges vor dem Aufbringen der Gleitschicht 6 auf die Oberfläche des Grundkörpers 4 durch Schleifen aufgebracht worden ist, anschließend wird die Gleitschicht 6 auf die profilierte Oberfläche 4 gespritzt.

Darüber hinaus ist es möglich, vor dem Aufbringen der Gleitschicht 6 den Grundkörper 4 induktiv spannungsarm zu glühen. Sämtliche Verfahren sind am Dorn 1 durchzuführen.

## Patentansprüche

1. Verfahren zur Herstellung von Kolbenringen, insbesondere für Verbrennungskraftmaschinen durch Abstechen einzelner Ringe von unrunden Buchsen aus metallischen Werkstoffen, dadurch gekennzeichnet, daß die Buchsen (3) durch thermisches Spritzen von Spritzmaterial auf die Außenfläche eines als Formkörper dienenden Domes (1) hergestellt werden, wobei der Dom (1) auf der Umfangsfläche eine Stoßmarkierung (10) aufweist, daß auf die Mantelfläche der Buchsen (3) eine als Gleitschicht (6) fungierende Schicht aufgetragen und schließlich Kolbenringe (8, 8', 8'') von der Buchse (3) abgestochen werden.

2. Verfahren nach Anspruch 1, dadurch gekennzeichnet, daß nach Auftragen des Spritzmaterials eine Verdichtung des Spritzmaterials durchgeführt wird.

3. Verfahren nach Anspruch 1 und 2, dadurch gekennzeichnet, daß die Verdichtung durch Rollieren erfolgt.

4. Verfahren nach den Ansprüchen 1 bis 3, dadurch gekennzeichnet, vor dem Auftragen der Gleitschicht (6) die Mantelfläche der Buchsen (3) geschliffen wird, so daß ein definiertes Profil (9) erzeugt wird.

5. Verfahren nach den Ansprüchen 1 bis 4, dadurch gekennzeichnet, vor dem Auftragen der Gleitschicht (6) die Buchse (3) spannungsarm geglüht wird.

6. Verfahren nach den Ansprüchen 1 bis 5, dadurch gekennzeichnet, daß die Gleitschicht (6) durch thermisches Spritzen aufgetragen wird.

7. Verfahren nach den Ansprüchen 1 bis 6, dadurch gekennzeichnet, daß die Kolbenringe (8,8',8'') im Hochgeschwindigkeits-Trennschleilverfahren von der Buchse (3) abgestochen werden.

8. Verfahren nach den Ansprüchen 1 bis 7, dadurch gekennzeichnet, daß der Dom (1) eine ovale Querschnittsform aufweist.

9. Verfahren nach den Ansprüchen 1 bis 8, dadurch gekennzeichnet, daß die Stoßmarkierung des Domes (1) als stegförmige Erhöhung ausgebildet ist.

10. Kolbenring, insbesondere für Verbrennungskraftmaschinen, hergestellt gemäß der Ansprüche 1 bis 8, dadurch gekennzeichnet, daß die Kolbenringe (8,8',8'') aus einem thermisch gespritzten Grundkörper (4) und einer Gleitschicht (6) bestehen.

11. Kolbenring nach Anspruch 10, dadurch gekennzeichnet, daß der Grundkörper (4) aus einem Eisenwerkstoffbesteht.

12. Kolbenring nach den Ansprüchen 10 und 11, dadurch gekennzeichnet, daß die Gleitschicht (6) aus einer Molybdän oder Molybdänlegierung besteht.
